# EUROPÄISCHE PATENTSCHRIFT

(11) **EP 0 988 430 B1**
(45) Veröffentlichungstag und Bekanntmachung des Hinweises auf die Patenterteilung: **21.05.2003**
(21) Anmeldenummer: 98932126.0
(22) Anmeldetag: 05.06.1998
(51) Int. Cl.: E04C 3/12, E04B 1/26, F16B 5/02

(54) **KOPPELPFETTE AUS ZWEI ODER MEHREREN, IN LÄNGSRICHTUNG EINANDER ÜBERLAPPEND ANEINANDER ANSCHLIESSENDEN HOLZBALKEN SOWIE BEFESTIGUNGSELEMENT ZUM VERBINDEN VON JEWEILS ZWEI EINANDER ÜBERLAPPENDEN ENDBEREICHEN VON HOLZBALKEN ZUM EINSATZ BEI EINER KOPPELPFETTE**
COUPLING PURLIN CONSISTING OF TWO OR MORE WOODEN BEAMS ADJOINING AND OVERLAPPING EACH OTHER LONGITUDINALLY, AS WELL AS FASTENING ELEMENT FOR JOINING TWO OVERLAPPING END AREAS OF WOODEN BEAMS FOR USE AS A COUPLING PURLIN
PANNE DE COUPLAGE CONSTITUEE DE DEUX OU PLUSIEURS POUTRES EN BOIS JOINTES L'UNE A L'AUTRE PAR CHEVAUCHEMENT LONGITUDINAL, AINSI QU'ELEMENT DE FIXATION POUR RELIER DEUX ZONES D'EXTREMITE SE CHEVAUCHANT DE POUTRES EN BOIS A UTILISER POUR UNE PANNE DE COUPLAGE

(30) Priorität: 09.06.1997 DE 19724284; 22.09.1997 DE 19741735
(43) Veröffentlichungstag der Anmeldung: 29.03.2000
(73) Patentinhaber: SFS intec Holding AG, 9435 Heerbrugg (CH)
(72) Erfinder: MATTLE, Paul, CH-9443 Widnau (CH)
(74) Vertreter: Ludescher, Hans
(86) Internationale Anmeldenummer: EP9803376
(87) Internationale Veröffentlichungsnummer: WO98057005

(56) Entgegenhaltungen:
- EP-A- 0 448 915
- DD-A- 236 563
- DE-A- 4 402 881
- DE-A- 19 513 729
- DE-C- 340 237
- DE-U- 29 603 866
- FR-A- 865 513
- GB-A- 840 492
- US-A- 2 292 557

## Beschreibung

Die Erfindung betrifft eine Koppelpfette aus mehreren, in Längsrichtung mit ihren Endbereichen überlappend aneinander anschließenden und biegesteif durch Schrauben verbundenen Holzbalken, wobei die Schrauben in zumindest annähernd quer zu den aneinander anliegenden Oberflächen der Holzbalken, d.h., zumindest annähernd rechtwinklig zu den Längsachsen der Holzbalken verlaufenden Ebenen angeordnet sind.

Koppelpfetten oder sogenannte Sparrenpfetten sind aus Einzelfeldträgern gebildet, welche über den Stützen, z.B. den Dachbindern, durch Nagelung oder Verdübelung biegesteif zu Durchlaufträgern verbunden werden. Die einzelnen, als Holzbalken ausgebildeten Träger werden feldweise um Balkenbreite gegeneinander versetzt angeordnet und überlappen sich in der Regel im Bereich der darunter liegenden Stützen bzw. Dachbinder. Da eine gegenseitige biegesteife Verbindung zwischen den einander überlappenden Endbereichen gefordert wird, werden normalerweise Bolzen allein wegen ihrer Nachgiebigkeit nicht als Verbindungsmittel zugelassen. In diesem Zusammenhang ist auch schon vorgeschlagen worden, an den aneinander anliegenden Oberflächen der einander überlappenden Endbereiche der Holzbalken Ausnehmungen vorzusehen, wobei in diese Ausnehmungen scheibenförmige Verbindungselemente eingesetzt werden, welche die Scherkräfte zwischen den beiden einander überlappenden Endbereichen der Holzbalken aufnehmen sollen. Durch zusätzliche, die Endbereiche der Holzbalken und die scheibenförmigen Teile durchdringende Anker werden jeweils zwei einander überlappende Endbereiche von Holzbalken zusammengehalten. Bei Einsatz solcher Befestigungselemente ergibt sich vor allem eine Beanspruchung auf Scherung und Biegung. Es bedarf daher auch einer entsprechend großen Dimensionierung der einzusetzenden Befestigungselemente.

Es sind aus "Mönck Will; Holzbau" als Koppelträger ausgebildete Durchlaufträger mit Nagel- bzw. Schraubenanschluss bekannt. Diese Koppelträger sind Träger auf zwei Stützen, die zu einem durchlaufenden Trägerzug verbunden werden. Die Verbindung erfolgt durch Nägel, die quer eingetrieben werden, und zusätzlich durch eine Maschinenschraube, die in ein vorgebohrtes Loch eingesteckt und mittels einer Mutter befestigt wird. Die zusätzlich eingesetzte Maschinenschraube bei diesem Durchlaufträger bedeutet zusätzlichen Arbeitsaufwand, weil ein Loch vorgebohrt, eine Mutter aufgeschraubt, die Balken durch eine Vorrichtung fest zusammengespannt werden müssen und die Mutter dann angezogen werden muss. Der Einsatz einer solchen Maschinenschraube ist bei dem bekannten Koppelträger erforderlich, weil die Nägel keine Auszugs- oder Ausreisskräfte aufnehmen können und auch nicht in der Lage sind, die beiden miteinander zu verbindenden Balken fest aneinander zu ziehen und zusammenzuhalten.

Aus der FR 865.513 A ist eine Holzverbindung bekannt, bei der spitzwinklig zu den aneinander anliegenden Oberflächen der Holzbalken ausgerichtete Schrauben vorgesehen sind, welche stets spitzwinklig zur Faserrichtung der Holzbalken eingedreht sind, so daß sich bei einer Beanspruchung auf die Holzverbindung auf die Schrauben zusätzliche Auszugs- und Ausreißkräfte ergeben.

Die Ausgestaltung nach der EP 0 448 915 A beschreibt ein Verfahren zur Herstellung eines Unterdachs sowie eine Schraube zur Durchführung des Verfahrens. Um die dazwischen liegende Isolationsschicht nicht zu belasten, werden die Holzbalken in einem bestimmten Abstand von einer darunter liegenden Holztragkonstruktion gehalten. Die eingesetzten Schrauben wirken also im wesentlichen als Abstandhalter zwischen zwei mit Abstand zueinander liegenden Holzbalken.

Bei einem bekannten Verbindungselement für plattenförmige Teile (DD 236 563 A1) ist ein zylindrischer Bolzen vorgesehen, welcher an seinen beiden Endbereichen zwei Gewindeabschnitte unterschiedlichen Durchmessers aufweist. Ein derartiges Verbindungselement muß in ein vorgebohrtes Loch eingesetzt werden und soll vor allem dazu dienen, in einem Knotenpunkt Konstruktionsglieder und Anschlüsse miteinander zu verbinden.

Die vorliegende Erfindung hat sich zur Aufgabe gestellt, eine Koppelpfette der eingangs genannten Art zu schaffen, bei der eine wesentlich verbesserte gegenseitige Befestigung der überlappenden Endbereiche von Holzbalken ermöglicht wird.

Erfindungsgemäß wird diese Aufgabe bei einer Koppelpfette dadurch gelöst, daß die Schrauben in den zumindest annähernd rechtwinklig zu den Längsachsen der Holzbalken verlaufenden Ebenen spitzwinklig zu den aneinander anliegenden-Oberflächen der Holzbalken ausgerichtet sind und dass die Schrauben ohne das Vorbohren von Löchern in die Holzbalken eingedreht sind.

Durch diese erfindungsgemäßen Maßnahmen werden die eingesetzten Befestigungselemente in Form von Schrauben in einer Kombination von Zug und Druck beansprucht, wobei die Kräfte durch das auf den Schrauben vorgesehene Gewinde übernommen werden. Bei einer solchen Koppelpfette sind praktisch keinerlei Vorarbeiten notwendig, denn das Eindrehen der Schrauben, welche spitzwinklig zu den aneinander anliegenden Oberflächen der Holzbalken ausgerichtet eingedreht werden, kann an Ort und Stelle auf dem Bau erfolgen. Bei einer solchen Vorgangsweise ist praktisch keine Beanspruchung auf Biegung und Scherung, sondern fast ausschließlich auf Zug und Druck gegeben. Dies ergibt sich sowohl durch den Einsatz von Schrauben als Befestigungselemente, als auch durch die spezielle Art des Eindrehens in einer quer zur Oberfläche verlaufenden Ebene. Eine besonders gute Wirkung bringt das spitzwinklige Eindrehen mit sich. Zudem kann in der Regel auch eine schnelle und vor allem sichere gegenseitige Befestigung von Holzbalken erfolgen, da für solche Schrauben nicht vorgebohrt werden muß.

Eine noch verbesserte Ausgestaltung wird dann erzielt, wenn jeweils paarweise Schrauben eingesetzt sind, welche in sich kreuzenden Richtungen in mit geringem Abstand aufeinander folgenden Ebenen liegend ausgerichtet sind. Es wird dadurch eine optimale Verbindung zwischen den einander überlappenden Endbereichen von Holzbalken geschaffen, wobei die Zug- und Druckkräfte in gleicher Weise auf beide Endbereiche der Holzbalken übertragen werden.

Bei einer solchen Variante wird vorgeschlagen, daß die jeweils paarweise sich kreuzend und mit Abstand aufeinander folgend eingesetzten Schrauben von der gleichen außen liegenden Oberfläche eines Holzbalkens ausgehend eingeschraubt sind. Diesfalls wird je eine Schraube von einer Seite aus einmal rechtwinklig oder In Richtung schräg nach oben und einmal rechtwinklig oder in Richtung schräg nach unten eingedreht, was von der Handhabung her gesehen die wohl einfachste Lösung ist. Die gegenseitige Verbindung von Holzbalken zu Koppelpfetten kann somit immer von der gleichen Seite aus vorgenommen werden.

Es besteht aber auch die Möglichkeit, daß je eine der jeweils paarweise sich kreuzend und mit Abstand aufeinander folgend eingesetzten Schrauben von den voneinander abgewandten, außen liegenden Oberflächen der beiben miteinander zu verbindenden Holzbalken ausgehend eingeschraubt ist. Eine solche Ausführungsvariante kann je nach Belastungsfall, aber auch je nach Ausführung der einzusetzenden Schrauben vorteilhaft sein.

In diesem Zusammenhang ist es auch möglich, daß jeweils ein oder mehrere Paar(e) der sich kreuzend eingesetzten Schrauben mit geringem Abstand vom jeweiligen Ende eines Holzbalkens eingesetzt ist bzw. sind. Bevorzugt eingesetzt wird eine solche Ausführungsvariante speziell bei stark dimensionierten Koppelpfetten und langen einander überlappenden Endbereichen der Holzbalken. Es sind dann über einen größeren Bereich der einander überlappenden Endbereiche mehrere Befestigungsabschnitte vorgesehen.

Durch den Einsatz von Schrauben als Befestigungselemente können aber durch die vorliegende Erfindung noch weit mehr Möglichkeiten geschaffen werden. So sieht eine besondere Ausführung vor, daß eine oder mehrere der spitzwinklig eingedrehten Schrauben über die unten liegende Oberfläche der miteinander zu verbindenden Holzbalken vorsteht bzw. vorstehen und mit ihrem bzw. ihren Enden in einen darunter angeordneten Holzträger eingreift bzw. eingreifen. Auf die erfindungsgemäße Art und Weise kann also nicht nur eine gegenseitige Befestigung der einander überlappenden Endbereiche von Holzbalken optimal durchgeführt werden, sondern es ist zusätzlich möglich, die aus den Holzbalken gebildete Koppelpfette durch die gleichen Schrauben mit dem darunter angeordneten Holzträger zu verbinden. Gerade dann, wenn für die einzelnen Holzbalken der Koppelpfette keine allzu großen Spannweiten vorgesehen sind, könnte es unter Umständen genügen, die beiden einander überlappenden Endbereiche der Holzbalken praktisch in einem Arbeitsgang miteinander zu verbinden und zugleich die dadurch gebildete Koppelpfette an dem darunter angeordneten Holzträger zu befestigen. Dabei ist es immer möglich, an den unmittelbaren Enden der einander überlappenden Endbereiche der Holzbalken zusätzlich Schrauben für die gegenseitige Befestigung einzusetzen.

Bei der Befestigung einer Koppelpfette mit dem darunter liegenden Holzträger kann eine vorteilhafte Ausgestaltung auch darin liegen, daß im Bereich der Kreuzung zwischen einer Koppelpfette und einem darunter angeordneten Holzträger neben den spitzwinklig eingesetzten Schrauben parallel zu den aneinander anliegenden Oberflächen der beiden einander überlappenden Endbereiche der Holzbalken eine oder mehrere Schrauben eingesetzt ist bzw. sind. Die parallel zu den gegeneinander gerichteten Oberflächen eingesetzte(n) Schraube(n) dient bzw. dienen praktisch nur zur gegenseitigen Befestigung der Koppelpfette mit dem Holzträger, wobei es hier hauptsächlich darauf ankommt, daß die Koppelpfette auf dem in einer entsprechenden Dachneigung verlaufenden Holzträger nicht kippt. Es ist daher lediglich notwendig, die Koppelpfette entsprechend an den Holzträger anzupressen.

In diesem Zusammenhang ist es vorteilhaft, wenn die zusätzliche(n) Schraube(n) dem überlappenden Endbereich des in Dachneigungsrichtung oben liegenden Holzbalkens zugeordnet ist bzw. sind. Damit wird eine noch verstärkte Maßnahme Im Sinne des Kippmomentes erreicht, denn es erfolgt eine Befestigung im obersten Abschnitt bezogen auf die Dachneigung, und der unterste Abschnitt der Koppelpfette in Richtung der Dachneigung gesehen bildet die zusätzliche Abstützung und stellt somit einen entsprechenden Hebelarm dar. Dadurch wird durch die einzusetzende Schraube bzw. die einzusetzenden Schrauben nur eine relativ geringe Kraft benötigt, um ein Kippen der Koppelpfette zu verhindern.

Eine optimale gegenseitige Befestigung der einander überlappenden Endbereiche von Holzbalken zu einer Koppelpfette wird dann erreicht, wenn die spitzwinklig geneigt zur Oberfläche der Holzbalken eingesetzten Schrauben mit der Oberfläche einen Winkel von annähernd 45° einschließen, so daß die einander kreuzend mit Abstand aufeinander folgenden Schrauben rechtwinklig zueinander angeordnet sind. Damit wird eine sehr gleichmäßige Verteilung der Kräfte auf beide Endbereiche der Holzbalken erreicht, wobei dann auch beide Schrauben des jeweiligen Paares in gleicher Weise auf Zug und Druck beansprucht sind.

Weitere erfindungsgemäße Merkmale und besondere Vorteile werden in der nachstehenden Beschreibung anhand der Zeichnungen noch näher erläutert. Es zeigen:
- Fig. 1: einen Schnitt durch eine Koppelpfette im Bereich eines eingesetzten Befestigungselementes;
- Fig. 2: eine Ansicht einer als Befestigungselement eingesetzten Schraube;
- Fig. 3: eine aus zwei einander überlappend aneinander anschließenden Holzbalken gebildete Koppelpfette, welche auf einem Holzträger aufliegt, wobei die gegenseitige Befestigung der Holzbalken durch Schrauben schematisch dargestellt ist;
- Fig. 4: eine gleiche Darstellung wie in Fig. 3, wobei jedoch schematisch dargestellt die Verbindung zwischen der Koppelpfette und dem Holzträger aufgezeigt ist;
- Fig. 5: einen Schnitt durch eine Koppelpfette mit einer Verbindung nach der bisherigen Methode;
- Fig. 6: eine Schrägsicht einer Koppelpfette mit einem darunter angeordneten Holzträger, wobei sowohl die Verbindung der Holzbalken der Koppelpfette als auch die Verbindung der Koppelpfette mit dem Holzträger in der bisher üblichen Art und Weise dargestellt ist.

Bei einer Koppelpfette 1 werden zwei in Längsrichtung einander überlappend aneinander anschließende Holzbalken 2 und 3 durch Befestigungselemente gegenseitig verbunden. Die Koppelpfetten 1 liegen dann auf entsprechenden Stützen oder auf Holzträgern 4 auf, welche horizontal ausgerichtet oder in einer entsprechenden Dachneigung verlaufend angeordnet sind. In der nachstehenden Beschreibung wird stets von zwei Holzbalken 2 und 3 gesprochen, die miteinander verbunden eine Koppelpfette bilden. Im Rahmen der Erfindung wäre es aber durchaus denkbar, mehr als zwei einander überlappend aneinander anschließende Holzbalken vorzusehen, wobei die Endbereiche von Holzbalken dann beispielsweise abwechselnd von der einen Seite und von der anderen Seite kommen. Es wäre in einem solchen Falle auch denkbar, daß nach der gegenseitigen Befestigung von zwei einander überlappenden Endbereichen von Holzbalken der nächste Holzbalken hinzugefügt und dieser überlappende Endbereich wieder mit dem nächstfolgenden Holzbalken befestigt wird. Diesfalls wären immer die unmittelbar aneinander anliegend, einander überlappenden Endbereiche zweier Holzbalken miteinander verbunden.

Die gegenseitige Verbindung erfolgt durch Befestigungselemente in Form von Schrauben 5, welche spitzwinklig zu den aneinander anliegenden Oberflächen 6, 7 der Holzbalken 2, 3 ausgerichtet sind und zumindest annähernd in einer quer zu diesen Oberflächen 6, 7 verlaufenden Ebene liegend eingedreht werden.

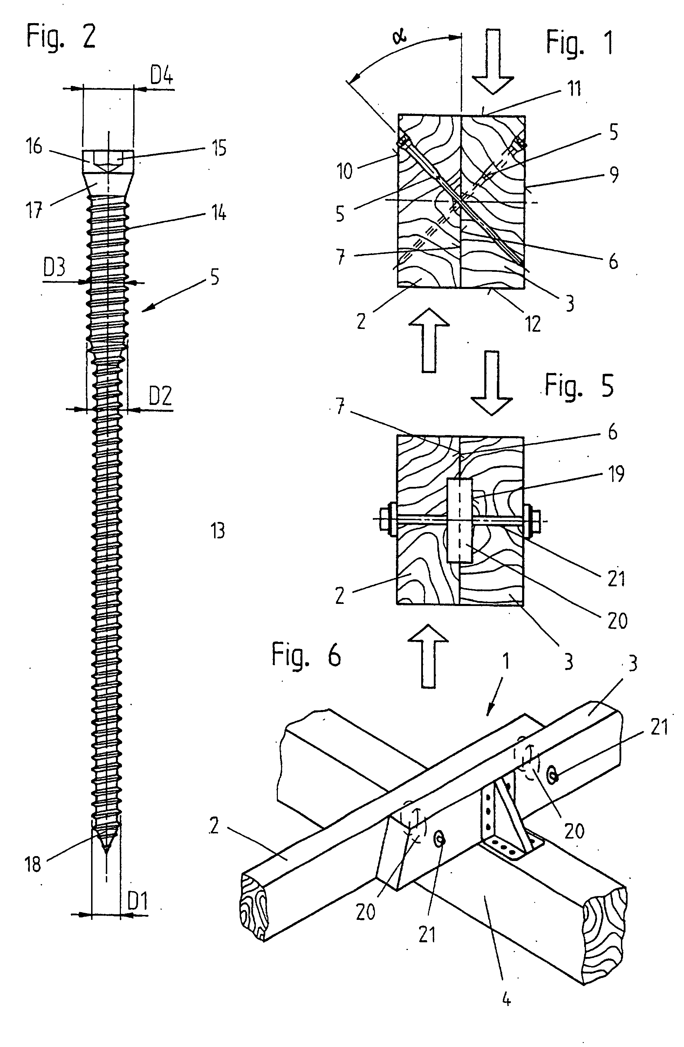

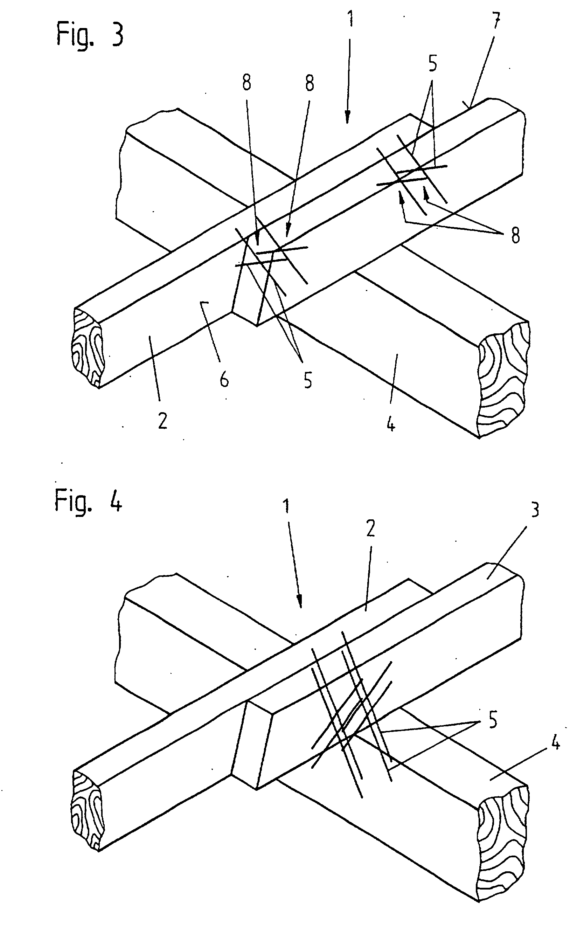

Wie insbesondere aus den Fig. 1 und 3 ersichtlich ist, sind jeweils paarweise solche Schrauben 5 eingesetzt, welche in sich kreuzenden Richtungen in mit geringem Abstand aufeinander folgenden Ebenen liegend ausgerichtet sind. Dabei ist es möglich, daß jeweils nur ein Paar solcher Schrauben 5 an den beiden unmittelbaren Enden der Endbereiche der Holzbalken 2 und 3 angeordnet ist. Je nach den zu übertragenden Kräften kann es aber auch sinnvoll sein, zwei solcher Paare 8 von Schrauben 5 - wie in Fig. 3 dargestellt - oder aber mehr als zwei solcher Paare 8 von Schrauben 5 vorzusehen. Bei der in Fig. 1 dargestellten Ausführungsform wird je eine der jeweils paarweise sich kreuzend und mit Abstand aufeinander folgend eingesetzten Schrauben 5 von den voneinander abgewandten, außen liegenden Oberflächen 9 und 10 der beiden miteinander zu verbindenden Holzbalken 2, 3 ausgehend eingeschraubt. Es wäre aber auch möglich, daß die jeweils paarweise sich kreuzend und mit Abstand aufeinander folgend eingesetzten Schrauben von der gleichen außen liegenden Oberfläche 9 oder 10 eines der Holzbalken 2 bzw. 3 ausgehend eingeschraubt sind.

Der Einschraubwinkel der Schrauben 5 wird je nach den besonderen Belastungsfällen zu wählen sein, doch wird sich eine Ausgestaltung als besonders vorteilhaft erweisen, bei der die spitzwinklig geneigt zur Oberfläche 6, 7 der Holzbalken 2, 3 eingesetzten Schrauben 5 mit der Oberfläche 6, 7 einen Winkel α von annähernd 45° einschließen. Dadurch sind die einander kreuzend mit Abstand aufeinander folgenden Schrauben 5 inetwa rechtwinklig zueinander ausgerichtet, wodurch die Zug- und Druckkräfte auf beiden Holzbalken 2, 3 in gleichem Maße übertragen werden und eine Lastaufnahme über die ganze Höhe der Holzbalken 2, 3 gewährleistet ist.

In diesem Zusammenhang ist zu erwähnen, daß es nicht unbedingt erforderlich ist, daß die Schrauben 5 von den Oberflächen 9 und 10 der Holzbalken 2, 3 ausgehend eingeschraubt werden. Es wäre auch denkbar, diese Schrauben an der Oberseite 11 oder an der Unterseite 12 der Koppelpfette anzusetzen, wobei dann natürlich ein relativ weit außen liegender Bereich gewählt werden muß, um bei einem spitzwinkligen Eindrehen beide Holzbalken 2, 3 entsprechend erfassen zu können.

Die hier als Befestigungselement einsetzbare Schraube 5 ist in einer möglichen Ausführungsvariante der Fig. 2 zu entnehmen. Bei dieser Schraube 5 sind zumindest an den beiden freien Endbereichen eines Schaftes Gewindeabschnitte 13 und 14 vorgesehen, welche unterschiedliche Durchmesser D1 bzw. D2, jedoch die gleiche Gewindesteigung aufweisen. Der Abschnitt 14 mit dem größeren Durchmesser D2 weist einen Kerndurchmesser D3 auf, welcher zumindest annähernd dem Außengewindedurchmesser D1 des Abschnittes 13 entspricht. Am freien Ende des Abschnittes 14 mit dem größeren Durchmesser D2 ist ein Innenangriff 15 für ein Eindrehwerkzeug ausgebildet. Die Ausgestaltung des Angriffes für ein Eindrehwerkzeug kann natürlich auf verschiedenste Art und Weise erfolgen. Bei der gezeigten Ausgestaltung ist an dem mit dem Innenangriff 15 ausgestatteten Ende des Schaftes ein gegenüber dem Gewindeabschnitt im Durchmesser D4 vergrößerter, zylindrischer Schraubenkopf 16 vorgesehen. Der Übergang 17 zwischen dem Gewindeabschnitt 14 und dem Schraubenkopf 16 ist als kegelstumpfförmige Erweiterung ausgebildet. Es ist dadurch in einfacher Weise eine Versenkmöglichkeit für den Schraubenkopf 16 geschaffen worden, ohne daß es zu einer zu starken Aufweitung der Gewindebohrung und somit zu einem Reißen im Bereich der Holzbalken 2, 3 kommt.

Im Rahmen der Erfindung ist es durchaus denkbar, Schrauben 5 mit anderer Konfiguration einzusetzen. Zu beachten ist lediglich, daß die Schraube 5 an den beiden Endbereichen des Schaftes einen Gewindeabschnitt aufweist, damit in beiden miteinander zu verbindenden Holzbalken 2, 3 ein entsprechender Gewindeeingriff vorhanden ist, um die notwendigen Zugund Druckkräfte übertragen zu können. Dabei ist es auch möglich, daß beide Gewindeabschnitte in ihrem Verlauf aufeinander abgestimmt sind, d.h. trotz eines eventuell vorhandenen gewindefreien Schaftes zwischen den Gewindeabschnitten eine durchgehend gleiche Gewindesteigung vorhanden ist. Denkbar ist es aber auch, durchgehend über die ganze Länge der Schraube 5 einen Gewindeabschnitt vorzusehen.

Am freien Ende der Schraube 5 ist eine Eindringspitze 18 ähnlich einer Spitze einer Holzschraube ausgebildet. Es ist im Rahmen der Erfindung ebenfalls denkbar, hier eine Art Bohrspitze bzw. einen entsprechenden Bohrteil vorzusehen, um nicht nur ein Aufweiten der Holzbalken zur Aufnahme der Schraube 5, sondern auch ein Abarbeiten von Spänen zur Bildung einer entsprechenden Öffnung für die Aufnahme der Schraube 5 zu bewirken. In einem solchen Falle werden die Fasern beim Eindrehen der Schraube 5 getrennt, wodurch die Spaltgefahr gegebenenfalls herabgesetzt wird.

Der Darstellung gemäß Fig. 4 ist zu entnehmen, daß neben der Befestigung zwischen den einzelnen Holzbalken 2, 3, welche die Koppelpfette 1 bilden, auch eine Befestigung zwischen der Koppelpfette 1 und dem darunter liegenden Holzträger geschaffen werden kann. Dannzumal stehen die spitzwinklig eingedrehten Schrauben 5 über die unten liegende Oberfläche 12 der beiden einander überlappenden Endbereiche der Holzbalken 2, 3 vor und greifen mit ihren Enden in den darunter angeordneten Holzträger 4 ein. Durch diese Art der Befestigung kann zugleich auch eine ordnungsgemäße Befestigung zwischen der Koppelpfette 1 und dem Holzträger 4 hergestellt werden. In diesem Zusammenhang ist es auch möglich, daß im Bereich der Kreuzung zwischen der Koppelpfette 1 und einem Holzträger 4 anstelle oder neben den spitzwinklig eingesetzten Schrauben 5 eine oder mehrere parallel zu den gegeneinander gerichteten Oberflächen 6, 7 ausgerichtete Schrauben eingesetzt werden. Solche zusätzlichen Schrauben sind vorteilhaft dem überlappenden Endbereich des in Dachneigungsrichtung oben liegenden Holzbalkens 2 zugeordnet. Dadurch wird in ausreichendem Maße ein Kippen der Koppelpfette verhindert.

In den Fig. 5 und 6 ist dargestellt, wie bisher mit relativ aufwendigen Arbeiten eine Befestigung der einander überlappenden Endbereiche von Holzbalken zur Bildung von Koppelpfetten und eine Befestigung der Koppelpfetten mit darunter liegenden Holzträgern erfolgte. Zur Verbindung der beiden Holzbalken 2 und 3 mußten an beiden einander zugewandten Oberflächen 6 und 7 Ausnehmungen 19 hergestellt werden, um einen scheibenförmigen Teil 20 einsetzen zu - können, welcher dann die erforderlichen Beanspruchungen auf Scherung und Biegung aufnahm. Durch zusätzliche, die Holzbalken 2 und 3 durchdringende Anker 21 wurde dann der gegenseitige Zusammenhalt der beiden Holzbalken 2 und 3 bewirkt. Zur Befestigung der Koppelpfette 1 mit dem darunter liegenden Holzträger 4 wurden in der Regel aus Blechteilen geformte Eckwinkel 22 eingesetzt, welche mit Schrauben sowohl an der Koppelpfette 1 als auch am Holzträger 4 befestigt wurden.

An sich dürfen bei Koppelpfetten glattschaftige Nägel verwendet werden. Da infolge der Dachneigung ständig wirkende Beanspruchungen auf Herausziehen entstehen, darf bei Verwendung von glattschaftigen Nägeln jedoch nicht vorgebohrt werden. Bei hohen Beanspruchungen werden Sondernägel (Schraubnägel, Rillennägel) verwendet, welche sich mit Druckluft betriebenen Nagelgeräten bis zu einem Durchmesser von 5 mm und bis zu einer maximalen Länge von 160 mm eintreiben lassen. Im Durchmesser größere oder aber längere Nägel müssen von Hand eingetrieben werden, wobei ebenfalls nicht vorgebohrt werden darf. Diese Arbeiten sind aufwendig und unter Umständen auch gefährlich, da sie in der Regel in großer Höhe auf einer Baustelle ausgeführt werden müssen.

Dies verdeutlicht, daß durch die beschriebenen Maßnahmen eine wesentliche Verbesserung bei der gegenseitigen Verbindung von Holzbalken zu Koppelpfetten und auch zwischen Koppelpfetten und Holzträgern erreicht wird. Nicht nur die Verbindung an sich, sondern auch die Handhabung und insbesondere die Handhabung auf der Baustelle wird verbessert, da in den Holzbalken keine exakt passenden Ausnehmungen vorbereitet werden müssen und keine Löcher vorzubohren sind.

## Patentansprüche

1. Koppelpfette aus mehreren, in Längsrichtung mit ihren Endbereichen überlappend an einander anschließenden und biegesteif durch Schrauben verbundenen Holzbalken, wobei die Schrauben in zumindest annähernd quer zu den aneinander anliegenden Oberflächen der Holzbalken, d.h. zumindest annähernd rechtwinklig zu den Längsachsen der Holzbalken verlaufenden Ebenen angeordnet sind, **dadurch gekennzeichnet, daß** die Schrauben (5) in den zumindest annähernd rechtwinklig zu den Längsachsen der Holzbalken (2, 3) verlaufenden Ebenen spitzwinklig zu den aneinander anliegenden Oberflächen (6, 7) der Holzbalken (2, 3) ausgerichtet sind und daß die Schrauben (5) ohne das Vorbohren von Löchern in die Holzbalken (2, 3) eingedreht sind.

2. Koppelpfette nach Anspruch 1, **dadurch gekennzeichnet, daß** jeweils paarweise Schrauben (5) eingesetzt sind, welche in sich kreuzenden Richtungen in mit geringem Abstand aufeinander folgenden Ebenen liegend ausgerichtet sind.

3. Koppelpfette nach Anspruch 2, **dadurch gekennzeichnet, daß** die jeweils paarweise sich kreuzend und mit Abstand aufeinander folgend eingesetzten Schrauben (5) von der gleichen außen liegenden Oberfläche (9, 10) eines Holzbalkens (2, 3) ausgehend eingeschraubt sind.

4. Koppelpfette nach Anspruch 2, **dadurch gekennzeichnet, daß** je eine der jeweils paarweise sich kreuzend und mit Abstand aufeinander folgend eingesetzten Schrauben (5) von den voneinander abgewandten, außen liegenden Oberflächen (9, 10) der beiden miteinander zu verbindenden Holzbalken (2, 3) ausgehend einschraubt ist.

5. Koppelpfette nach einem der Ansprüche 2 bis 4, **dadurch gekennzeichnet, daß** jeweils eines odere mehrere Paare (8) der sich kreuzend eingesetzten Schrauben (5) mit geringem Abstand vom jeweiligen Ende eines Holzbalkens (2, 3) eingesetzt ist bzw. sind.

6. Koppelpfette nach einem der Ansprüche 2 bis 5, **dadurch gekennzeichnet, daß** die spitzwinklig geneigt zur Oberfläche (6, 7) der Holzbalken (2, 3) eingesetzten Schrauben (5) mit der Oberfläche einen Winkel (a) von annähernd 45° einschließen, so daß die einander kreuzend mit Abstand aufeinander folgenden Schrauben (5) rechtwinkelig zueinander angeordnet sind.

7. Koppelpfette nach einem der Ansprüche 1 bis 6, **dadurch gekennzeichnet, daß** eine oder mehrere der spitzwinkelig eingedrehten Schrauben (5) über die unten liegende Oberfläche (12) der miteinander zu verbindenden Holzbalken (2, 3) vorsteht bzw. vorstehen und mit ihrem bzw. ihren Enden in einen darunter angeordneten Holzträger (4) eingreift bzw. eingreifen.

8. Koppelpfette nach Anspruch 7, **dadurch gekennzeichnet, daß** im Bereich der Kreuzung zwischen einer Koppelpfette (1) und einem darunter angeordneten Holzträger (4) neben den spitzwinklig eingesetzten Schrauben (5) parallel zu den aneinander anliegenden Oberflächen (6, 7) der beiden einander überlappenden Endbereiche der Holzbalken (2, 3) eine oder mehrere zusätzliche Schrauben eingesetzt ist bzw. sind.

9. Koppelpfette nach Anspruch 8, **dadurch gekennzeichnet, daß** die zusätzliche(n) Schraube(n) dem überlappenden Endbereich des in Dachneigungsrichtung oben liegenden Holzbalkens (2, 3) zugeordnet ist bzw. sind.

## Claims

1. A coupling purlin comprising a plurality of timber beams which are adjacent one another in longitudinal direction with their end zones overlapping and which are rigidly connected by screws, wherein the screws are disposed in planes extending at least approximately transversely to the adjoining surfaces of the timber beams, i.e at least approximately at right angles to the longitudinal axes of the timber beams, **characterised in that** the screws (5) are aligned in the planes extending approximately at right angles to the longitudinal axes of the timber beams (2,3) at an acute angle to the adjoining surfaces (6,7) of the timber beams (2,3), and **in that** the screws (5) are screwed into the timber beams (2,3) without holes being predrilled.

2. A coupling purlin according to Claim 1, **characterised in that** respective pairs of screws (5) are used, which are aligned horizontally in intersecting directions in consecutive planes at a small distance apart.

3. A coupling purlin according to Claim 2, **characterised in that** the screws (5) respectively intersecting one another in pairs and inserted consecutively at a distance apart are screwed in from the same outerlying surface (9,10) of one timber beam (2,3).

4. A coupling purlin according to Claim 2, **characterised in that** each one of the screws (5) respectively intersecting one another in pairs and inserted consecutively at a distance apart is screwed in from the mutually remote outerlying surfaces (9,10) of the two timber beams (2,3) to be joined together.

5. A coupling purlin according to any one of Claims 2 to 4, **characterised in that** in each case one or more pairs (8) of the screws (5) inserted intersecting one another is/are inserted at a small distance apart from the respective end of a timber beam (2,3).

6. A coupling purlin according to any one of Claims 2 to 5, **characterised in that** the screws (5) inserted at an acute-angled inclination to the surface (6,7) of the timber beams (2,3) form with the surface an angle (α) of approximately 45° so that the intersecting screws (5) succeeding one another at a distance apart are disposed at right angles to one another.

7. A coupling purlin according to any one of Claims 1 to 6, **characterised in that** one or more of the screws (5) screwed in at an acute angle projects or project over the bottom surface (12) of the timber beams (2,3) to be joined together and engages or engage at its end or their ends into a timber girder disposed thereunder.

8. A coupling purlin according to Claim 7, **characterised in that** in the vicinity of the intersection between a coupling purlin (1) and a timber girder (4) disposed thereunder, in addition to the screws (5) inserted at an acute angle, one or more additional screws is or are inserted parallel to the adjoining surfaces (6,7) of the two mutually overlapping end zones of the timber beams (2,3).

9. A coupling purlin according to Claim 8, **characterised in that** the additional screw(s) is/are associated with the overlapping end zone of the timber beam (2,3) situated at the top in the direction of the roof slope.

## Revendications

1. Panne de couplage constituée de plusieurs poutres en bois reliées l'une à l'autre avec chevauchement de leurs extrémités et rigidification par des vis situées dans des plans au moins à peu près perpendiculaires aux surfaces de contact des poutres, c'est-à-dire des plans perpendiculaires aux axes longitudinaux de ces poutres,
**caractérisée en ce que**
les vis (5) situées dans les plans à peu près perpendiculaires aux axes longitudinaux des poutres en bois (2, 3) sont orientées obliquement par rapport aux surfaces en contact (6, 7) de ces poutres, et les vis (5) sont enfoncées par vissage dans les poutres (2, 3) sans perçage préalable de trous.

2. Panne de couplage selon la revendication 1,
**caractérisée en ce que**
les vis (5) sont montées deux par deux, selon des directions qui se croisent et dans des plans se suivant à courte distance.

3. Panne de couplage selon la revendication 2,
**caractérisée en ce que**
les vis (5) croisées deux par deux et se suivant à une certaine distance, sont montées par vissage à partir d'une surface externe (9, 10) d'une poutre en bois (2, 3).

4. Panne de couplage selon la revendication 2,
**caractérisée en ce que**
les vis (5) croisées deux par deux et se suivant à une certaine distance, sont montées par vissage à partir de deux surfaces externes opposées (9, 10) des deux poutres en bois (2, 3) à relier.

5. Panne de couplage selon l'une quelconque des revendications 2 à 4,
**caractérisée en ce qu'**
une ou plusieurs paires (8) de vis croisées (5) est (sont) montée(s) à faible distance de l'extrémité d'une poutre (2, 3) respectivement.

6. Panne de couplage selon l'une quelconque des revendications 2 à 5,
**caractérisée en ce que**
les vis (5) montées inclinées selon un angle aigu par rapport aux surfaces (6, 7) des poutres en bois (2, 3) font chacune avec la surface correspondante un angle (α) d'environ 45° de sorte que deux vis (5) qui se suivent forment entre elles un angle droit.

7. Panne de couplage selon l'une quelconque des revendications 1 à 6,
**caractérisée en ce qu'**
une ou plusieurs des vis (5) montées obliquement dépasse(nt) la face inférieure (12) des poutres (2, 3) à relier et est (sont) en prise par son (ses) extrémité(s) dans le support en bois (4) situé dessous.

8. Panne de couplage selon la revendication 7,
**caractérisée en ce que**
dans la zone où se croisent une panne de couplage (1) et un support en bois (4) situé en dessous, en plus des vis (5) montées selon un angle aigu, une ou plusieurs vis sont montées parallèlement aux surfaces en contact (6, 7) des extrémités qui se chevauchent des poutres en bois (2, 3).

9. Panne de couplage selon la revendication 8,
**caractérisée en ce que**
la (les vis supplémentaire(s) est (sont) associée(s) à la zone extrême en chevauchement de la poutre en bois (2, 3) située en haut en direction de la pente du toit.
